# EUROPEAN PATENT APPLICATION

(11) **EP 4 840 594 A1**
(43) Date of publication of application: **18.11.2026**
(21) Application number: 26178781.6
(22) Date of filing: 14.05.2026
(51) Int. Cl.: B25J 9/16, B65G 43/08, G06T 13/20

(54) **CONTROL METHOD OF A HANDLING SYSTEM OF AN ARTICLE**

(30) Priority: 14.05.2025 IT 202500010812
(71) Applicant: G.D S.p.A., 40133 Bologna (IT)
(72) Inventor: SUMINI, Valentina, 40133 Bologna (IT); GHINI, Marco, 40133 Bologna (IT); BIONDI, Andrea, 40133 Bologna (IT); LIBERATO, Antonella, 40133 Bologna (IT)
(74) Representative: Tirloni, Bartolomeo

(57) **Abstract**

Control method of a handling system (2) of an article (3), comprising scanning a real space (RS) in which the article (3) is to be moved to obtain a digital scan of the real space (RS), visualizing a visualization of the real space (RS), receiving as input a user command for defining, within the visualization of the real space (RS), a current candidate trajectory (Tc) for moving the article (3); defining a control volume (cv2) comprising the current candidate trajectory (Tc); obtaining a mesh (M2) of the portion of the visualization of the real space (RS) enclosed by the control volume (cv2) as a function of a portion of the digital scan corresponding to the portion of the visualization of the real space (RS); defining a movement trajectory (Tm) as a function of the current candidate trajectory (Tc) and a risk of collision between the mesh (M2) and a further mesh representative of an encumbrance of the article (3), simulated in movement along the current candidate trajectory (Tc); and controlling the handling system (2) as a function of the movement trajectory (Tm).

## Description

### Technical field of the invention

The present invention relates to a control method of a handling system of an article.

### State of the art

In industrial plants, especially in the context of mass production of consumer goods, including the packaging phase, it is known to use handling systems of such articles, for example in order to handle such articles along transport paths.

### Summary of the invention

The term "article" means any physical object, including both a finished product and a semi-finished product during one or more phases of a respective production or treatment process. Examples of articles may be flat or folded sheets or three-dimensional objects, made of paper, cardboard, polymeric material, composite material, metallic material, containers, boxes, packages, mechanical parts, components of complex products to be assembled together to realize such complex products, garments or clothing, pieces of fabric, etc.

In the aforementioned context of handling articles, the Applicant faced the problem of being able to control a handling system of an article in a simple manner, for example in terms of user-machine interaction, precise, for example in terms of compatibility of movement of the article with the available physical space, for example by avoiding possible collisions with objects arranged in proximity of the movement path of the article, and at the same time efficient, for example in terms of required computational burden. According to the Applicant, the aforementioned problem is solved by a control method of a handling system of an article according to the appended claims and/or having one or more of the following features.

According to one aspect the invention relates to a control method a handling system of an article along a movement trajectory.

Preferably the method comprises scanning, by means of an acquisition device, a(n entire) real space in which said article is to be handled by said handling system, to obtain a digital scan of said real space.

Preferably the method comprises visualizing, by means of an artificial reality system, a visualization of said real space.

Preferably the method comprises receiving a user command as input for defining, within said visualization of said real space, a current candidate trajectory for the handling of said article by said handling system from a starting point to an end point of said current candidate trajectory.

Preferably the method comprises defining, in said visualization of said real space, a control volume as a function of said current candidate trajectory.

Preferably said control volume comprises said current candidate trajectory.

Preferably the method comprises obtaining a mesh of a portion of said visualization of said real space enclosed by said control volume as a function of a portion of said digital scan corresponding to said portion of said visualization of said real space (as a consequence of a one-to-one correlation between said digital scan and said visualization of the real space).

Preferably the method comprises obtaining a further mesh representative of a volume of said article.

Preferably the method comprises simulating a movement of said further mesh entirely along the current candidate trajectory.

Preferably the method comprises calculating a risk of collision between said mesh and said further mesh during said movement.

Preferably the method comprises defining said movement trajectory as a function of said current candidate trajectory and of said risk of collision.

Preferably defining the movement trajectory comprises performing a comparison between said risk of collision and a given threshold.

Preferably defining the movement trajectory comprises, when said risk of collision is less than or equal to the given threshold, setting said movement trajectory equal to said current candidate trajectory.

Preferably defining the movement trajectory comprises, when said risk of collision is higher than the given threshold, modifying said current candidate trajectory to generate a new current candidate trajectory and repeating at least the steps of defining a control volume, obtaining a mesh, simulating said further mesh in movement, and defining said movement trajectory on the basis of the new current candidate trajectory and of said risk of collision;

Preferably the method comprises controlling said handling system as a function of said movement trajectory.

The term "mesh" means any digital mesh representation, such as for example a polygonal type representation, also known as a "polygonal mesh".

According to the Applicant, the control method according to the present invention enables simple, precise and at the same time computationally efficient control of a handling system, for example for moving the desired article.

In fact, thanks to the visualization of the real space by means of the artificial reality system, and to the possibility of receiving as input the user command for defining the current candidate trajectory within the visualization itself, it is possible to provide a simple and intuitive user interface that enables the user to configure the desired movement trajectory autonomously and directly, regardless of the user's computer skills. In fact, thanks to the visualization of the real space and the definition of the trajectory within such visualization, the user can set the current candidate trajectory simply by autonomously visualizing any obstacles that are present and therefore setting the desired path on the basis of such possible obstacles (e.g. by attempting to avoid such obstacles from the outset).

Consequently, thanks to defining the control volume comprising the current candidate trajectory and obtaining the mesh (also referred to in technical jargon as a "mesh") of the (only) portion of the visualization enclosed by the control volume, it is possible to enable the system to recognize any obstacles that would interfere with the movement of the article along the current candidate trajectory.

In other words, obtaining the mesh of the (only) portion of the visualization of the real space enclosed by the control volume as a function of a corresponding portion of the digital scan (e.g. made corresponding as a consequence of a one-to-one correlation between the digital scan and the visualization of the real space, for example by referencing both the digital scan and the visualization of the real space with respect to a common reference system) enables limiting the computational burden to the (only) processing of the portion of the digital scan corresponding to the aforementioned portion of the visualization, and therefore to the realization of the mesh substantially only of the portion of space delimited around the current candidate trajectory, while at the same time not losing significant information relating to any obstacles present along the path.

In general, the control volume, defined as a function of the current candidate trajectory desired by the user, represents a three-dimensional virtual "mask" defined from time to time around the current candidate trajectory, thereby delimiting a portion of the visualization of the real space surrounding the current candidate trajectory, and therefore a corresponding portion of the digital scan, only with respect to which the system processes the respective mesh useful for obtaining the movement trajectory, thereby dynamically updating itself according to the user's preferences in defining the current candidate trajectory. In this way, any obstacles in the most relevant region of the real space, namely along the candidate trajectory, are recognized, thereby balancing computational effort with precision and safety of movement of the article.

Finally, defining the movement trajectory as a function of the current candidate trajectory and the risk of collision between the mesh and the further mesh, simulated in movement entirely along the current candidate trajectory, enables taking into account any such obstacles along the candidate path, thereby preventing the article from colliding with such obstacles. In particular, defining the current candidate trajectory, in the broadest sense, may comprise: i) immediate definition of the movement trajectory if the current candidate trajectory initially set by the user is already suitable for avoiding any collision (that is, if the calculation of the risk of collision gives a negative result, i.e. absence of collision); ii) non-definition of a movement trajectory if the current candidate trajectory set by the user is such that the further mesh collides with the mesh (that is, if the calculation of the risk of collision gives a positive result, i.e. presence of collision); and/or iii) iterative modification, e.g. according to predefined rules and/or by the user, of the current candidate trajectory into a new current candidate trajectory until the calculation of the risk of collision gives a negative result-absence of collision-and/or until a predefined maximum number of iterations is reached (for which, if no current candidate trajectory capable of avoiding collisions has been found, the system returns an error message and no movement trajectory is defined).

Finally, controlling said handling system as a function of said movement trajectory, which also comprises not actuating the handling system when no movement trajectory has been found, for example following one or more of the cases just described above, enables moving the article only when there is complete safety in doing so.

The present invention in one or more of the aforementioned aspects may have one or more of the following preferred features.

Preferably said artificial reality comprises extended reality (XR). In the context of the present invention, extended reality means, for example, all real and virtual combined environments and human-machine interactions generated by computer technology and wearable devices. For example, extended reality may comprise, without limitation, representative forms such as augmented reality (AR), mixed reality (MR), augmented virtuality (AV), virtual reality (VR, particularly advantageous for remote control of the handling system), and areas blended therebetween.

According to another aspect, the present invention relates to a control apparatus of a handling system of an article.

Preferably said apparatus comprises an artificial reality system.

Preferably said apparatus comprises (at least) an acquisition device structured to scan a real space in which said article is to be moved by said handling system to obtain a digital scan of said real space.

Preferably said artificial reality system is structured to visualize a visualization of said real space.

Preferably said artificial reality system comprises a processing unit.

Preferably said processing unit is programmed to receive as input a user command for defining, within said visualization of the real space, a current candidate trajectory for moving said article by the handling system from a starting point to an end point of said current candidate trajectory.

Preferably said processing unit is programmed to define, in said visualization of the real space, a control volume as a function of said current candidate trajectory. Preferably said control volume comprises said current candidate trajectory.

Preferably said processing unit is programmed to obtain a mesh of a portion of said visualization of the real space enclosed by said control volume as a function of a portion of said digital scan corresponding to said portion of said visualization of the real space. Preferably said processing unit is programmed to obtain a further mesh representative of an encumbrance of said article.

Preferably said processing unit is programmed to simulate said further mesh in movement entirely along said current candidate trajectory.

Preferably said processing unit is programmed to calculate a risk of collision between said mesh and said further mesh during said movement.

Preferably said processing unit is programmed to define a movement trajectory of said article as a function of said current candidate trajectory and said risk of collision. Preferably defining the movement trajectory comprises performing a comparison of said risk of collision with a given threshold.

Preferably defining the movement trajectory comprises, when said risk of collision is less than or equal to the given threshold, setting said movement trajectory equal to said current candidate trajectory.

Preferably defining the movement trajectory comprises, when said risk of collision is greater than the given threshold, modifying said current candidate trajectory to generate a new current candidate trajectory and, on the basis of the new current candidate trajectory, repeating at least the steps of defining a control volume, obtaining a mesh, simulating said further mesh in movement, and defining said movement trajectory as a function of said current candidate trajectory and said risk of collision.

Preferably said processing unit is programmed to control said handling system as a function of said movement trajectory.

Preferably said processing unit is programmed to implement one or more of the, more preferably all of the, preferred embodiments of said control method as defined by the preferred features of said method described below.

In one embodiment, defining said current candidate trajectory comprises setting a respective spatial position, in said visualization of the real space, of at least one among a starting point and an end point of said current candidate trajectory.

In one embodiment, defining said current candidate trajectory comprises setting, in said visualization of the real space, a respective spatial position of at least one lifting point representative of a (vertical) lifting height of said article. Optionally, setting the respective spatial position of the at least one lifting point may be performed manually by the user or autonomously (e.g. by the processing unit) as a function of the respective spatial position of the starting point and/or the end point.

In one embodiment, defining said current candidate trajectory comprises tracing, in said visualization of the real space, an (entire) candidate movement path of said article. Preferably the candidate movement path passes through each of said starting point, end point and lifting point.

Preferably the method comprises visualizing, by means of said artificial reality system, in superposition to said visualization of said real space, a virtual element representing said current candidate trajectory. In this way, the visual feedback for the user is further intuitive.

Preferably said virtual element comprises respective graphical elements representative of one or more, more preferably each one, of said starting point, end point and lifting point of the current candidate trajectory.

Preferably said virtual element comprises a further graphical element representative of said candidate movement path.

Preferably defining said movement trajectory comprises evaluating whether said further mesh (more preferably a respective virtual surface portion belonging to said further mesh) contacts (or penetrates) (in at least one given simulated instantaneous position of said further mesh along said current candidate trajectory) said mesh (more preferably a respective virtual surface portion belonging to said mesh) during said virtual movement to provide said risk of collision.

In one embodiment, said risk of collision assumes a first value (e.g. numerical, for example equal to 1) provided that said collision is present (in at least one given instantaneous position of said further mesh along said current candidate trajectory).

In one embodiment, said risk of collision assumes a second value different from said first value (e.g. numerical, for example equal to 0) provided that said collision is absent (in each instantaneous position of said further mesh along said current candidate trajectory). In one embodiment, defining said movement trajectory comprises, preferably when said risk of collision assumes said first value, setting said movement trajectory as absent. For example, the movement trajectory coincides with an initial position of said further mesh (e.g. with respect to the reference system).

In one embodiment, defining said movement trajectory comprises, preferably when said risk of collision assumes said first value, modifying said current candidate trajectory to obtain a new current candidate trajectory (which is preferably substituted for the previous current candidate trajectory).

In one embodiment, defining said movement trajectory comprises, preferably when said risk of collision assumes said second value, setting said movement trajectory equal to the current candidate trajectory.

In one embodiment, defining said movement trajectory is performed iteratively over time as a function of said risk of collision, preferably until said risk of collision assumes said second value and/or until performing a number of iterations equal to a predefined maximum number. In this way, reliability is further improved.

In one embodiment, at least one among, preferably both, said defining and modifying said current candidate trajectory is performed manually by the user, more preferably by means of said artificial reality system.

In one embodiment, modifying said current candidate trajectory is performed automatically (e.g. by said processing unit), for example as a function of predefined modification rules of the current candidate trajectory (e.g. vertical and/or horizontal displacement of the lifting point and/or of the end point by a predetermined amount, etc.). Preferably modifying said current candidate trajectory comprises modifying at least one among said respective spatial positions of said starting point, end point and lifting point.

Preferably modifying said current candidate trajectory is performed by manipulating (e.g. by the user and/or the processing unit), in said visualization of the real space, one or more of said respective graphical elements representative of said starting point, end point and lifting point and/or by manipulating said further graphical element. In this way, the operations are extremely intuitive and simplified.

Preferably said control volume entirely contains said current candidate trajectory. In this way, said control volume is defined in a manner highly functional for the intended purposes.

Preferably said control volume is centered on an extension of said current candidate trajectory. For example, said current candidate trajectory may be configured as a generating line of the three-dimensional (virtual) control volume defined therearound. In this way, the method is highly rational and/or precision and/or safety of the method are further improved.

In one embodiment, said method comprises simulating said further mesh in virtual movement entirely along said current candidate trajectory (regardless of said defining said movement trajectory).

In one embodiment, defining said control volume is performed as a function of said simulating said further mesh in virtual movement. In other words, in one embodiment, the control volume is defined as the volume overall "traced" by the further mesh during the movement virtually simulated entirely along the current candidate trajectory. In this way, efficiency is further improved, since the mesh is subsequently obtained only for the portion of the visualization of the real space swept by the encumbrance of the article, thereby avoiding including in the mesh, and therefore in the computational effort, portions of the visualization of the real space that would in any case not be collided with by the article during movement along the trajectory.

Preferably said digital scan comprises a plurality of virtual points referenced with respect to a predefined reference system.

Preferably said predefined reference system is georeferenced. In this way, the digital scan can be oriented consistently with the real space.

Preferably said method comprises uniquely correlating said digital scan and said visualization of the real space with each other.

Preferably said predefined reference system is common to said visualization of the real space. In this way, the digital scan and the visualization of the real space are correlated in a simple manner.

Preferably obtaining said mesh comprises processing said portion of said digital scan, more preferably comprises selecting a subset of virtual points of said plurality of virtual points, each virtual point of said subset being located within said control volume. Preferably obtaining said mesh comprises creating a virtual grid connecting said virtual points of said subset of virtual points, said grid defining at least one portion of virtual surface.

Preferably said mesh comprises nodes mutually connected by means of straight segments and faces defined (e.g. delimited) by said straight segments.

Preferably said nodes correspond to said virtual points of said subset of virtual points. Preferably said method further comprises scanning, by means of said acquisition device, said article to obtain a further digital scan of said article.

Preferably said further digital scan comprises a respective plurality of virtual points referenced with respect to a respective reference system, more preferably said predefined reference system. In this way, the digital scan of the article can be compared with the digital scan of the real space for movement of the article.

Preferably said method comprises obtaining said further mesh as a function of said further digital scan. In this way, precision is improved.

Preferably obtaining said further mesh comprises one or more of, more preferably all of, the features relating to obtaining said mesh (referred to the further digital scan and the respective plurality of virtual points where necessary).

In a preferred embodiment, for example when said article is located within said real space, and for example (and preferably) said further digital scan corresponds to a portion of the digital scan of the real space, obtaining said further mesh may comprise the steps described below.

In such embodiment, the method comprises visualizing, by means of the artificial reality system, said visualization of said real space in which said article is also present.

Preferably said method further comprises uniquely correlating said further digital scan and said visualization of the real space with each other. In this way, the digital scan of the real space, the digital scan of the article, and the visualization of the real space (with the article) are mutually consistent.

In such embodiment, said method comprises visualizing, by means of said artificial reality system, in superposition to said visualization of said real space, a further virtual element defining a further control volume.

Preferably said method comprises receiving a further user command as input and modifying, as a function of said received further user command, said further virtual element so that said further control volume encloses, in the visualization of the real space, a further portion of said visualization of said real space in which said article is represented. Preferably said method comprises obtaining said further mesh as the mesh of said further portion of the visualization of the real space enclosed by said further control volume as a function of said further digital scan (preferably the further digital scan represents a respective further portion of the digital scan of the real space corresponding to the further portion of the visualization of the real space). In this way, the computational effort is further limited. According to the Applicant, in fact, by selecting (by the user or automatically by the processing unit) an appropriate further control volume enclosing the visualization of the article, it is possible to obtain the further mesh of (only) the portion of the visualization of the real space enclosed by the further control volume, in order to enable the system to substantially detect only the article itself (and therefore its encumbrance), without, also in this case, necessarily obtaining the mesh of the entire visualization of the real space. In other words, the further control volume represents a respective "mask" through which only the portion of the visualization of the real space in which the article is represented (and the corresponding digital scan) is selected, in order to obtain the mesh of (only) the portion of interest, namely, in this case, the article.

Preferably said further user command comprises defining at least one among: a geometric shape of said further virtual element, an extension of at least one geometric dimension of said further virtual element, and a spatial position of said further virtual element in said visualization of the real space. In this way, the method is widely versatile. In one embodiment, modifying said further virtual element comprises manipulating said further virtual element by said user (for example directly, if the artificial reality system is capable of visualizing a virtual representation of the hands of the user, and/or by means of a user screen structured to receive as input numerical values set by the user representative of one or more of the aforementioned options comprised in the further user command).

Preferably said further user command modifies said further virtual element in said visualization of the real space by means of one or more of the following ways: rigid translation of the further virtual element, expansion of at least one dimension of the further virtual element, contraction of at least one dimension of the further virtual element. In this way, the spatial position of the further virtual element in the visualization of the real space and the geometric dimension of the further virtual element are modified respectively in a simple and intuitive manner.

In one embodiment, defining said geometric shape of said further virtual element is performed as a function of a geometric shape of said article. In this way, precision and/or reliability are improved.

Preferably said method comprises setting a control parameter of said handling system as a function of said further mesh.

Preferably the method comprises controlling said handling system also as a function of said control parameter.

Preferably setting said control parameter comprises defining a gripping point on said further mesh.

Preferably said handling system is controlled to grasp said article as a function of said gripping point.

Preferably defining said current candidate trajectory comprises causing said gripping point to coincide with said starting point, more preferably by modifying at least one among said gripping point and said starting point, even more preferably by modifying only said starting point so that it coincides with the gripping point. In this way, defining the trajectory is simplified, since the gripping point, which depends on the article (e.g. the configuration and/or position of the article), is more difficult to modify.

Preferably said method further comprises defining a release point of said article by said handling system coinciding with said end point of said current candidate trajectory.

Preferably defining said movement trajectory comprises maintaining said gripping point as the starting point of said movement trajectory and/or maintaining said release point as the end point of said movement trajectory. In this way, simplicity of implementation is improved.

Preferably said handling system comprises a robotic arm having at least one actuator structured to grasp said article.

Preferably said obtaining said mesh and/or defining said movement trajectory are repeated cyclically over time with a predetermined period. In this way, reliability is further improved since it is possible to update over time the information relating to any obstacles that have appeared at a later time (with respect to the first obtaining of the further mesh) in correspondence with the trajectory.

It should be specified that some steps of the method described above may be independent of the execution order reported, except where a sequence or simultaneity between two or more steps is expressly indicated. Furthermore, some steps may be optional. Furthermore, some steps may be performed repetitively, or may be performed in series or in parallel with other steps of the method.

### Brief description of the figures

Figure 1 schematically shows a control apparatus according to an embodiment of the present invention.
Figures 2-4 schematically show a respective phase of a control method according to a respective embodiment of the present invention.
Figure 5 shows a block diagram of an embodiment of the control method according to the present invention.

### Detailed description of some embodiments of the invention

The features and advantages of the present invention will be further clarified by the following detailed description of some embodiments, provided by way of non-limiting example of the present invention, with reference to the attached figures.

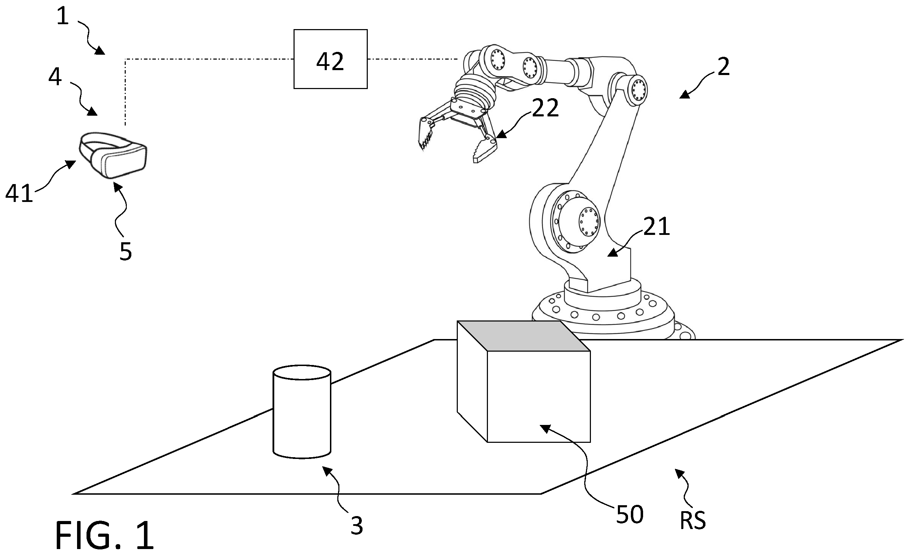

In Figure 1, reference numeral 1 globally indicates a control apparatus of a handling system 2 of an article 3.

Exemplarily the handling system 2 comprises a robotic arm 21, for example having five or more axes of rotation, for example of a known type, having an actuator 22 arranged at an end of the robotic arm and structured to be able to grasp the article 3.

Exemplarily the apparatus 1 further comprises an artificial reality system 4. For example, the artificial reality system 4 is programmed to be able to perform extended reality functions.

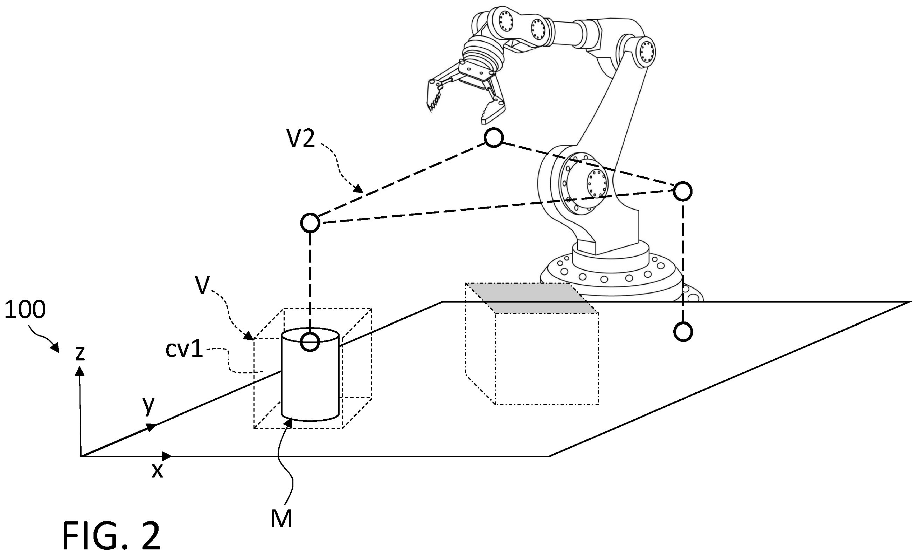

Exemplarily the apparatus 1 comprises an acquisition device 5. Conceptually, the acquisition device 5 is programmed to operate in synergy with the artificial reality system 4, as is for example known in the art. For example, the acquisition device 5 may comprise a LIDAR technology system capable of scanning a real space and returning a digital scan. Exemplarily the digital scan comprises a plurality of virtual points also referred to in technical jargon as a "point cloud", exemplarily referenced with respect to a predefined reference system 100 (Figure 2) which is in turn georeferenced.

Exemplarily each virtual point corresponds to the interception point between the electromagnetic radiation beam (e.g. laser) coming from the acquisition device and a physical obstacle of the real space, thereby being able to reconstruct the real space itself by points (as is for example known).

Exemplarily the predefined reference system 100 is represented by Cartesian coordinates, but may optionally also be expressed in polar coordinates or cylindrical coordinates.

Exemplarily furthermore, the artificial reality system 4 comprises at least one visor 41 (Figure 1 - shown only schematically), for example of the type wearable by a user (e.g. Google Lens^{™}, Oculus Rift^{™}, HoloLens 2^{™}, Meta Quest 3^{™}, etc.). Exemplarily the visor 41 is capable of capturing images (photos and/or videos, e.g. matrix-based, color, etc.) of the real space in order to then return the images to the user. The acquisition of images is intended both in the case in which the visor is opaque to the direct view of the user and comprises a camera and a monitor for visualizing the images acquired by the camera, and in the case in which the visor comprises a transparent visor through which the user can directly view the real space and onto which the virtual elements are projected.

In one embodiment (not shown), the artificial reality system may comprise, in addition or as an alternative to the visor, a tablet or a smartphone provided with a camera and a touchscreen display, and through which images or videos of the real space can be acquired and shown to the user on the display.

Exemplarily, not shown, the artificial reality system further comprises at least one device structured to receive command inputs from a user, such as for example an input peripheral, such as a keyboard, a touchscreen display, and/or one or more handheld controllers.

In embodiments, the acquisition device 5 may be integrated into the handling system 2, for example into the robotic arm 21, for example at the actuator 22 and/or at a support base of the robotic arm 21.

Exemplarily the artificial reality system 4 comprises a processing unit 42 (shown only schematically).

Exemplarily the processing unit 42 is connected to the handling system 2 to control the handling system 2.

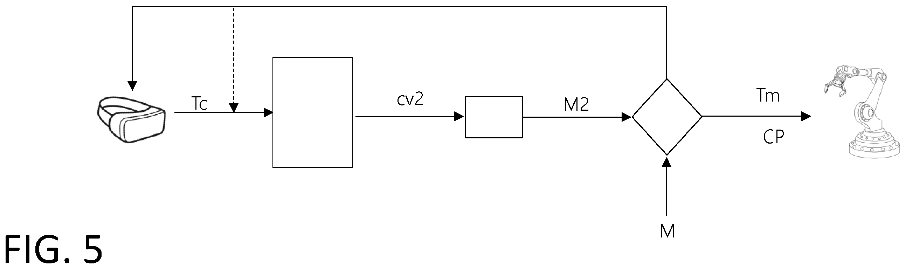

In the following, a control method of the handling system 2 (Figures 2-5) will be exemplarily described, for example implementable by means of the apparatus 1 described above.

Exemplarily the method comprises scanning, by means of the acquisition device 5, a real space RS (for example, a warehouse or an industrial plant) in which the article 3 is to be moved by the handling system 2 to obtain the digital scan of the real space RS.

The method further comprises scanning, by means of the acquisition device 5, the article 3 to obtain a further digital scan of the article 3.

Exemplarily the further digital scan also comprises a respective plurality of virtual points referenced, exemplarily, with respect to the predefined reference system 100.

Exemplarily the method comprises visualizing, by means of the artificial reality system 4, a visualization of the real space RS. In other words, the artificial reality system 4 shows the user a representation of the real space RS.

As for example shown in Figures 1-4, the article 3 is located within the real space RS. In such case, the further digital scan exemplarily corresponds to a portion of the digital scan of the real space RS. In such embodiment, the method exemplarily comprises visualizing, by means of the artificial reality system 4, the visualization of the real space RS in which the article 3 is also present (thus also visualizing the representation of the article 3). Exemplarily the method further comprises uniquely correlating each of said digital scan and said further digital scan with the visualization of the real space RS.

Exemplarily the processing unit 42 is programmed to receive as input a user command and define, as a function of the received user command, within the visualization of the real space RS, a current candidate trajectory Tc for moving the article 3 by the handling system 2. For example, the user command is an instruction or interaction provided by the user to the processing unit 42 by means of the artificial reality system 4, in particular by means of the device structured to receive command inputs from the user.

Exemplarily defining the current candidate trajectory Tc is performed manually by the user by means of the artificial reality system 4.

In one embodiment, defining the current candidate trajectory Tc comprises setting a respective spatial position, in the visualization of the real space RS, of at least one among: a starting point and an end point of the current candidate trajectory Tc. For example, the user selects, by direct interaction with the artificial reality system, the respective starting and end points of the current candidate trajectory Tc. In response to such input, the processing unit 42 may for example process the current candidate trajectory Tc as a function of the selected starting and end points.

In one embodiment (for example as an alternative or in combination with the above), defining the current candidate trajectory Tc comprises tracing, in the visualization of the real space RS, a candidate movement path of the article 3. For example, the user traces in the three-dimensional space or draws on the touchscreen display a line graphically representing the candidate path. In response, provision may therefore be made for processing the current candidate trajectory Tc as a function of such candidate path.

In one embodiment, defining the current candidate trajectory Tc comprises setting, in the visualization of the real space RS, a respective spatial position of at least one lifting point SP1 representative of a (vertical) lifting height of the article 3. Optionally, setting the respective spatial position of the at least one lifting point SP1 may be performed manually by the user or autonomously (e.g. by the processing unit 42) as a function of the respective spatial position of the starting point and/or the end point, and/or for example as a function of further control parameters, such as safety parameters and encumbrances of the article (e.g. known in advance). Exemplarily the lifting point SP1 is associated with a lowering point SP2 in correspondence with the release point, where for example the handling system begins the lowering (vertical in the example shown) of the article, down to a release point RP (described in greater detail below).

Exemplarily the method comprises visualizing, by means of the artificial reality system 4, in superposition to the visualization of the real space RS, a virtual element V2 representing the current candidate trajectory Tc. Exemplarily the virtual element V2 is visualized by the user by means of the visor 41 operated by the processing unit 42. Alternatively, if for example the control method is performed remotely, provision may be made for arranging at least one camera that frames the real space RS and sends the recorded images (preferably in real time) to a video terminal, on which images the virtual element V2 is visualized.

An example of the visualization provided to the user by the method is schematically shown, for example, in Figures 2-4, with different virtual elements V, V2 shown in superposition to the visualization of the real space RS, as will be better described below. Exemplarily the virtual element V2 comprises respective graphical elements exemplarily visualized by the symbol "O", representative of the starting point, end point, lifting point SP1 and lowering point SP2 of the current candidate trajectory Tc.

Exemplarily the virtual element V2 comprises a further graphical element, exemplarily shown by dashed straight segments, representative of the candidate movement path (exemplarily passing through each of the starting point, end point, lifting point and lowering point).

Exemplarily the method comprises defining, in the visualization of the real space RS, a control volume cv2 as a function of the current candidate trajectory Tc. Exemplarily the control volume cv2 comprises, by entirely containing, the current candidate trajectory Tc. Exemplarily the control volume is centered on the extension of the current candidate trajectory Tc.

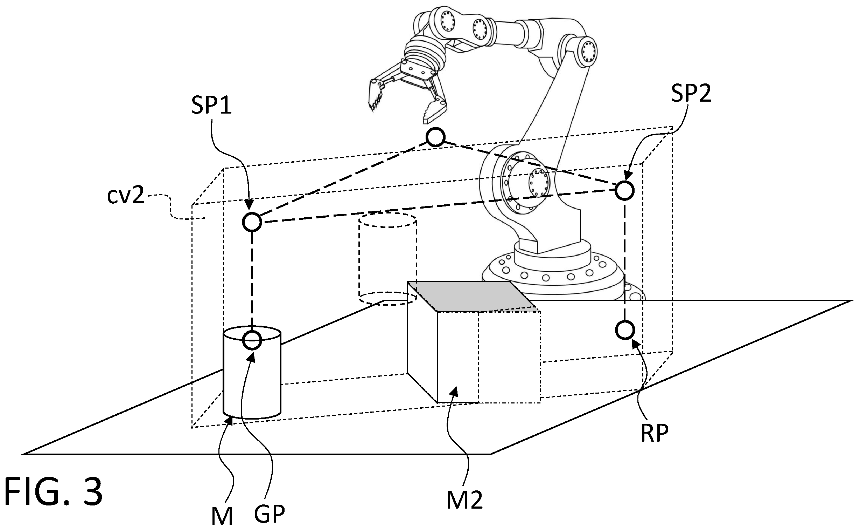

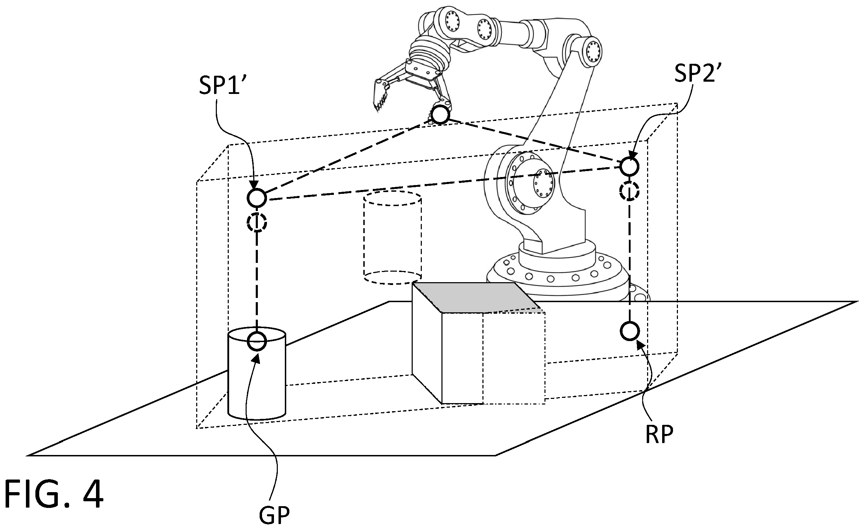

Exemplarily as shown in Figures 3 and 4, the control volume cv2 has, in detail, the shape of a parallelepiped having, for example, as a plane of symmetry, the plane on which the current candidate trajectory Tc lies.

In one embodiment, for example in the case in which the current candidate trajectory Tc is defined by a curved line, the control volume cv2 may be a three-dimensional solid extending along the current candidate trajectory Tc itself, surrounding the current candidate trajectory Tc with a predetermined cross-section, for example cylindrical or curvilinear prismatic.

It is understood that the shape of the control volume may include other geometric shapes, such as a sphere, a cylinder, or other shapes defining an arbitrary (virtual) volume, preferably closed.

Exemplarily in superposition to the visualization of the real space RS, the further virtual element V defining a further control volume cv1 and also having, in detail, the shape of a parallelepiped is also visualized. Similarly to what has been described for the control volume cv2, the shape of the further control volume cv1 may also vary, including other geometric shapes, such as a sphere, a cylinder, or other shapes defining an arbitrary (virtual) volume, preferably closed.

Exemplarily the method further comprises receiving as input a further user command and modifying, as a function of the received further user command, the further virtual element V so that the further control volume cv1 encloses, in the visualization of the real space RS, a portion of the visualization of the real space RS in which the article 3 is represented (as shown in Figure 2).

For example, the aforementioned further user command comprises defining at least one among: a geometric shape of the further virtual element V (for example by selecting the desired shape from a library of available shapes and/or by manually drawing a desired shape), a geometric dimension of the further virtual element V, and a spatial position of the further virtual element V in the visualization of the real space RS.

More in detail, modifying the further virtual element V may for example comprise manipulating the further virtual element V directly by the user, if the artificial reality system is capable of visualizing a virtual representation of the hands of the user (and therefore, by means of gestures, the user is capable of moving the further virtual element within the visualization of the real space RS and/or modifying the shape thereof).

In combination or as an alternative, the manipulation may be performed by the user by means of a screen structured to receive as input numerical values set by the user representative of one or more of the aforementioned options comprised in the further user command, for example the measurements of the dimensions of the further virtual element, the positioning coordinates (for example of a vertex), etc.

In one embodiment, the further user command may modify the further virtual element in the visualization of the real space RS by means of one or more of the following ways: rigid translation of the further virtual element V, expansion of at least one dimension of the further virtual element V, contraction of at least one dimension of the further virtual element V.

In one embodiment, defining the geometric shape of the further virtual element may further be performed as a function of a geometric shape of the article (e.g. known to the user). For example, in the case of an article having a well-defined rigid shape, it may be particularly advantageous to use a further control volume having a parallelepiped, cylindrical or spherical shape.

Exemplarily the method therefore comprises obtaining a mesh M2 of a portion of the visualization of the real space RS enclosed by the control volume cv2 as a function of a portion of the digital scan corresponding to the portion of the visualization of the real space RS.

Exemplarily therefore, the mesh M2 is obtained for the entire real space RS comprising the entire movement path of the article. Exemplarily, this enables, for example, realizing the mesh M2 of the obstacle 50 (shown only schematically) so that the system can "see" such obstacle arranged along the current candidate trajectory (and therefore potentially interfering with the movement of the article).

Exemplarily the method further comprises obtaining a further mesh M representative of an encumbrance of the article. Exemplarily, the further mesh M represents a further portion of the visualization of the real space RS enclosed by the further control volume cv1 as a function of a further portion of the digital scan (exemplarily coinciding with the further digital scan) corresponding to such further portion of the visualization of the real space RS.

Exemplarily in order to obtain the above in a simple manner, the digital scan and the visualization of the real space RS are uniquely correlated with each other, for example by referencing both with respect to the same predefined reference system 100, in such a way that a generic portion of the visualization of the real space RS corresponds to one and only one respective portion of the digital scan (i.e. a subset of virtual points of the aforementioned plurality of virtual points).

Exemplarily the mesh and the further mesh comprise nodes mutually connected by means of straight segments and faces (exemplarily having a triangular shape) delimited by such straight segments.

In detail, obtaining the mesh M2 comprises processing the portion of the digital scan, more precisely selecting a subset of virtual points (the aforementioned nodes) of the plurality of virtual points of the digital scan, each virtual point of the subset being located within the control volume cv2 (as a consequence of the aforementioned one-to-one relationship between the digital scan and the visualization of the real space RS), and creating a virtual grid connecting the virtual points of the subset of virtual points. Exemplarily the grid virtually reproduces the external surface of the articles whose representation is contained within the control volume cv2.

Preferably the number of virtual points of the subset (that is, those representing the nodes of the grid) is much smaller than the virtual points of the digital scan originally acquired, thereby limiting the data to be processed by the processing unit and therefore further improving the method in terms of efficiency and rapid response to user commands. Exemplarily therefore, the mesh M2 is obtained for the entire portion of the real space arranged along the current candidate trajectory Tc.

As regards the further mesh M, it is obtained for substantially the entire encumbrance of the article 3.

In one embodiment, the method comprises simulating the further mesh M in virtual movement entirely along the current candidate trajectory Tc, and defining the control volume cv2 is performed as a function of such simulation. In other words, the control volume cv2 is defined as the volume overall "traced" by the further mesh M during the movement virtually simulated along the current candidate trajectory Tc.

Exemplarily the method further comprises setting a control parameter CP of the handling system 2 as a function of the further mesh M and controlling the handling system 2 also as a function of the control parameter CP.

Exemplarily setting the control parameter CP comprises defining a gripping point GP on the further mesh M, wherein the handling system 2 is controlled to grasp the article 3 as a function of the gripping point GP.

The definition of the gripping point GP may take place by one or more of the following ways.

In one embodiment (not shown), defining the gripping point GP comprises:
**i)** calculating a barycenter of the further control volume cv1;
**ii)** projecting the barycenter along a predefined direction (preferably vertical, parallel to the z-axis of the reference system 100) until intercepting an intersection point belonging to the further mesh M; and
**iii)** identifying the gripping point GP as the intersection point.

Preferably the routine described above is performed automatically by the processing unit 42.

Alternatively, or in combination, the gripping point GP may be defined by means of the following routine comprising:
**a)** defining, in the visualization of the real space, a candidate gripping point GPc; and
**b)** projecting the candidate gripping point GPc onto the further mesh M to obtain the gripping point GP.

More in detail, defining the candidate gripping point GPc exemplarily comprises **a1)** visualizing the candidate gripping point GPc in the visualization of the real space RS and **a2)** positioning, in the visualization of the real space, the candidate gripping point GPc in proximity of the article 3, preferably manually, by means of the artificial reality system, by the user (who may therefore at will move the candidate gripping point GPc close to the portion of the article at which the user wishes the article to be substantially grasped by the handling system 2).

Alternatively, the candidate gripping point may be positioned in proximity of the article 3 automatically by the processing unit 42.

In a first embodiment (not shown), projecting the candidate gripping point GPc exemplarily comprises:
**i)** calculating a respective distance between the candidate gripping point GPc and each of a plurality of nodes of the further mesh M (identified automatically by the software and/or selected by the user); and
**ii)** identifying the gripping point GP as the node of the further mesh M having the smallest respective distance to the candidate gripping point GPc.

In a second embodiment (not shown), projecting the candidate gripping point GPc comprises:
**i)** performing a projection of the candidate gripping point GPc parallel to the z-axis of the predefined reference system 100; and
**ii)** identifying the gripping point GP as an intersection point (e.g. any node or a point of a face of the further mesh M) between the projection of the candidate gripping point GPc and the further mesh M (in the case of two or more intersection points, it is preferred to select the one having the smallest distance from the candidate gripping point GPc).

In a third embodiment (not shown), projecting the candidate gripping point GPc comprises:
**i)** for each face of one or more faces of the further mesh M, calculating a respective plurality of oriented vectors vi orthogonally, away from the face; and
**ii)** identifying the gripping point GP as an origin point of the oriented vector vi that intersects the candidate gripping point GPc.

Exemplarily defining the release point RP is performed manually by the user by means of the artificial reality system 4 in the visualization of the real space RS (or automatically by a processing unit 42).

Exemplarily defining the current candidate trajectory Tc further comprises causing the gripping point GP to coincide with the starting point of the current candidate trajectory Tc by modifying the starting point (initially defined by the user) so that it coincides with the gripping point GP.

Exemplarily the method further comprises defining a release point RP of the article 3 by the handling system 2 coinciding with the end point of the current candidate trajectory Tc. Exemplarily, the method comprises defining a movement trajectory Tm of the article 3 as a function of the current candidate trajectory Tc and a risk of collision between the mesh M2 and the further mesh M simulated in movement entirely along the current candidate trajectory Tc.

In particular, defining the movement trajectory Tm exemplarily comprises simulating the further mesh in virtual movement entirely along the current candidate trajectory Tc. Such step, therefore, in addition to being performable independently of the definition of the movement trajectory Tm, is exemplarily also comprised among the activities provided for defining such movement trajectory, in order to ensure consistency of the steps of defining the movement trajectory when performed iteratively over time (until convergence), as better described below.

The virtual simulation of the further mesh M in movement entirely along the current candidate trajectory Tc is exemplarily performed by the processing unit 42. Optionally, such simulation may be visualized in superposition to the visualization of the real space RS.

Exemplarily defining the movement trajectory Tm comprises evaluating whether the further mesh M, for example a respective virtual surface portion belonging to the further mesh M, contacts or penetrates, in at least one given simulated instantaneous position of the further mesh M along the current candidate trajectory Tc, the mesh M2, for example a respective virtual surface portion belonging to the mesh M2, during the virtual movement to provide the aforementioned risk of collision.

For example, the processing unit 42 assigns, on the basis of such virtual simulation, a value, for example a numerical value, to the risk of collision.

Exemplarily the risk of collision assumes a first value, for example equal to 1, provided that the collision is present in at least one given instantaneous position of the further mesh M along the current candidate trajectory Tc, and a second value, for example equal to 0, provided that the collision is absent in each instantaneous position of the further mesh M along the current candidate trajectory Tc.

In the example shown in Figures 3 and 4, the current candidate trajectory Tc (initially proposed) shown in Figure 3, following the virtual simulation of the movement of the further mesh M along the current candidate trajectory Tc itself, generates a collision between the obstacle 50 (in the portion of such obstacle comprised within the control volume cv2 and therefore "rendered" by the mesh M2) and the further mesh M of the article. Exemplarily therefore, the system assigns, in such simulated circumstance, the first value to the risk of collision.

Exemplarily therefore, defining the movement trajectory Tm comprises, when the risk of collision assumes the first value, modifying the current candidate trajectory Tc into a new current candidate trajectory Tc, which replaces the previous current candidate trajectory Tc (Figure 4).

Exemplarily modifying the current candidate trajectory Tc comprises modifying at least one among: the respective spatial position of one or more of the starting point, end point and lifting point SP1. For example, as shown in Figure 4, modifying the current candidate trajectory Tc comprises modifying the spatial position (in the visualization of the real space RS) of the lifting point SP1 and lowering point SP2 by vertically raising such lifting point SP1 and lowering point SP2, thereby obtaining the new lifting point SP1' and lowering point SP2'. At this point, it is exemplarily provided to repeat said defining the movement trajectory Tm by again simulating the further mesh M in movement along the new current candidate trajectory Tc. In the example shown, the (simulated) further mesh M of the article 3 does not collide with the mesh M2 of the obstacle 50. In such case, the risk of collision assumes the second value.

Exemplarily therefore, defining the movement trajectory Tm comprises setting the movement trajectory Tm equal to the (new) current candidate trajectory Tc when the risk of collision assumes the second value.

Exemplarily defining the movement trajectory Tm is performed iteratively over time as a function of the risk of collision, preferably until the risk of collision assumes the second value and/or until performing a number of iterations equal to a predefined maximum number. In particular, it is exemplarily provided, for each new current candidate trajectory Tc, to repeat over time the following steps: simulating the further mesh in virtual movement entirely along the new current candidate trajectory Tc, evaluating whether the further mesh contacts the mesh during the virtual movement to provide a new risk of collision and, each time the new risk of collision assumes the first value (and/or until the maximum number of iterations), modifying the new current candidate trajectory Tc into a further new current candidate trajectory, and so on. Alternatively, if for example the maximum number of iterations has been reached without the risk of collision assuming the second value, provision may be made for the system to return an error message.

Furthermore, for example, modification of the current candidate trajectory into the new current candidate trajectory may be requested from the user (one or more times), and/or performed automatically, as better described below.

In one embodiment, modifying the current candidate trajectory Tc is performed manually by the user, for example by means of the artificial reality system 4 by manipulating, in the visualization of the real space RS, the respective graphical elements representative of the starting point, end point, lifting point SP1 and lowering point SP2 (in the example shown, only the latter two).

In one embodiment, modifying the current candidate trajectory Tc is performed automatically (e.g. by the processing unit 42), for example as a function of predefined modification rules of the current candidate trajectory Tc (e.g. vertical and/or horizontal displacement of the lifting point and/or the end point by a predetermined amount, etc.).

In one embodiment, for example, if the system returns an error message (i.e. when the risk of collision assumes the first value for a number of attempts equal to the maximum number), defining the movement trajectory comprises setting the movement trajectory Tm as absent. For example, for processing purposes, the movement trajectory Tm coincides with an initial position of the further mesh M (e.g. with respect to the reference system). Exemplarily defining the movement trajectory Tm comprises maintaining the gripping point GP as the starting point of the movement trajectory Tm and maintaining the release point RP as the end point of the movement trajectory Tm.

Exemplarily, the method also comprises controlling the handling system 2 as a function of the movement trajectory Tm.

Optionally, geometric constraints and/or movement encumbrance constraints of the handling system 2 may be comprised in the definition of the movement trajectory Tm by modifying the current candidate trajectory Tc as described above.

Exemplarily furthermore, obtaining the mesh M2 and defining the movement trajectory Tm are repeated cyclically over time with a predetermined period, in order to keep the maneuvering space of the handling system 2 along the movement trajectory Tm monitored so as to promptly detect any obstacles that may have appeared in the meantime.

## Claims

1. Control method of a handling system (2) of an article (3) along a movement trajectory (Tm), said method comprising:
i) scanning, by means of an acquisition device (5), a real space (RS) in which said article (3) is to be handled by said handling system (2), to obtain a digital scan of said real space (RS);
ii) visualizing, by means of an artificial reality system (4), a visualization of said real space (RS);
iii) receiving a user command as input for defining, within said visualization of said real space (RS), a current candidate trajectory (Tc) for the handling of said article (3) by said handling system (2) from a starting point to an end point of said current candidate trajectory (Tc);
iv) defining, in said visualization of said real space (RS), a control volume (cv2) as a function of said current candidate trajectory (Tc), said control volume (cv2) comprising said current candidate trajectory (Tc);
v) obtaining a mesh (M2) of a portion of said visualization of said real space (RS) enclosed by said control volume (cv2) as a function of a portion of said digital scan corresponding to said portion of said visualization of said real space (RS);
vi) obtaining a further mesh (M) representative of a volume of said article (3);
vii) simulating a movement of said further mesh (M) entirely along the current candidate trajectory (Tc) and calculating a risk of collision between said mesh (M2) and said further mesh (M) during said movement;
viii) defining said movement trajectory (Tm) as a function of said current candidate trajectory (Tc) and of said risk of collision; wherein defining the movement trajectory (Tm) comprises performing a comparison between said risk of collision and a given threshold, and:
a) when said risk of collision is less than or equal to the given threshold, setting said movement trajectory equal to said current candidate trajectory;
b) when said risk of collision is higher than the given threshold, modifying said current candidate trajectory to generate a new current candidate trajectory and repeating at least the steps from iv) to viii) on the basis of the new current candidate trajectory;
ix) controlling said handling system (2) as a function of said movement trajectory (Tm).

2. Method according to claim 1, wherein defining said current candidate trajectory (Tc) comprises setting a respective spatial position, in said visualization of said real space (RS), of at least one between said starting point and end point of said current candidate trajectory (Tc).

3. Method according to any one of the previous claims, comprising displaying, by means of said artificial reality system (4), in superposition to said visualization of said real space (RS), a virtual element (V2) representing said current candidate trajectory (Tc).

4. Method according to any one of the previous claims, wherein defining said movement trajectory (Tm) comprises evaluating if said further mesh touches said mesh during said movement to calculate said risk of collision.

5. Method according to claim 4, wherein defining said current candidate trajectory (Tc) comprises setting, in said visualization of said real space (RS), a respective spatial position of at least one lifting point (SP1) representative of a lifting height of said article (3), and wherein modifying said current candidate trajectory (Tc) comprises modifying at least one among said respective spatial positions of said starting point, end point, lifting point (SP1).

6. Method according to any one of the previous claims, wherein defining said control volume (cv2) is performed as a function of said further mesh (M) simulated as having a movement entirely along said current candidate trajectory (Tc).

7. Method according to any one of the previous claims, further comprising scanning, by means of said acquisition device (5), said article (3) to obtain a further digital scan of said article (3), and obtaining said further mesh (M) as a function of said further digital scan.

8. Method according to any one of the previous claims, comprising, when said article (3) is located within said real space (RS), displaying by means of said artificial reality system (4) said visualization of said real space (RS) in which said article (3) is also present, displaying by means of said artificial reality system (4), in superposition to said visualization of said real space (RS), a further virtual element (V) defining a further control volume (cv1), receiving a further user command as input and modifying, as a function of said further user command received, said further virtual element (V) so that said further control volume (cv1) encloses, in said visualization of said real space (RS), a further portion of said visualization of said real space (RS) in which said article (3) is represented; obtaining said further mesh (M) as a mesh of said further portion of said visualization of said real space (RS) enclosed by said further control volume (cv1) as a function of a further portion of said digital scan corresponding to said further portion of said visualization of said real space (RS).

9. Method according to any one of the previous claims, comprising setting a control parameter (CP) of said handling system (2) as a function of said further mesh (M), wherein said setting said control parameter (CP) comprises defining a grasping point (GP) on said further mesh (M), said handling system (2) being controlled to grasp said article (3) as a function of said grasping point (GP), wherein defining said current candidate trajectory (Tc) comprises making said grasping point (GP) coincide with said starting point of said current candidate trajectory (Tc).

10. Method according to claim 9, wherein defining said movement trajectory (Tm) comprises maintaining said grasping point (GP) as starting point of said movement trajectory (Tm).
